# EUROPÄISCHE PATENTANMELDUNG

(11) **EP 2 955 599 A1**
(43) Veröffentlichungstag der Anmeldung: **16.12.2015**
(21) Anmeldenummer: 15001707.7
(22) Anmeldetag: 09.06.2015
(51) Int. Cl.: G05B 19/042, G05B 13/02, G05B 15/02

(54) **VERFAHREN ZUM STEUERN EINES HEIMAUTOMATISIERUNGSNETZWERKS, STEUEREINRICHTUNG UND HEIMAUTOMATISIERUNGSNETZWERK**

(30) Priorität: 13.06.2014 DE 102014108374
(71) Anmelder: LOEWE Technologies GmbH, 96317 Kronach (DE)
(72) Erfinder: Gaidzik, Roland, 96369 Weissenbrunn (DE)

(57) **Zusammenfassung**

Die vorliegende Erfindung betrifft ein Verfahren zum Steuern eines Heimautomatisierungsnetzwerks, eine Steuereinrichtung sowie ein Heimautomatisierungsnetzwerk. In dem Heimautomatisierungsnetzwerk werden über eine Steuereinrichtung (100) Daten zu Lebewesen sowie von dem Lebewesen vorgenommene Änderungen der Schaltzustände von elektrischen und elektronischen Geräten und Einrichtungen sowie deren Betriebsparameter gespeichert. Aus diesen Daten werden unter Verwendung von Datum, Uhrzeit und Erkennungsmerkmale der Lebewesen Szenen kreiert, wobei beim Vorliegen wesentlich gleicher Zustände die elektronischen und elektrischen Geräte und Einrichtungen nach Maßgaben von gespeicherten Szenen gesteuert werden.

## Beschreibung

Die vorliegende Erfindung betrifft ein Verfahren zum Steuern eines Heimautomatisierungsnetzwerks, eine Steuereinrichtung sowie ein Heimautomatisierungsnetzwerk.

Heimautomatisierungsnetzwerke umfassen in der Regel zumindest einen Teil der in einem Haushalt vorhandenen elektrischen und elektronischen Geräte. Zudem umfassen Heimautomatisierungsnetzwerke bspw. Beleuchtungseinrichtungen. Bei bekannten Heimautomatisierungsnetzwerken werden die elektrischen und elektronischen Geräte und Einrichtungen von mindestens einem Steuergerät gesteuert, welches die Bedienung der Geräte und Einrichtungen in Abhängigkeit von Eingaben eines Benutzers steuert. Insbesondere ist es bei einer Vielzahl derartiger Heimautomatisierungsnetzwerke möglich, die Geräte und Einrichtungen über Onlinedienste zu steuern, wenn ein Benutzer nicht im Haus ist.

Bei den bekannten Steuereinrichtungen für Heimautomatisierungsnetzwerke wird der Betrieb der elektrischen und elektronischen Geräte über den Benutzer im Vorfeld programmiert und ein Betrieb der Geräte und Einrichtungen erfolgt nur dann, wenn bestimmte, eingestellte Zustände oder zeitliche Vorgaben erreicht sind. Zur Änderung dieser Zustände muss der Benutzer das Steuergerät neu programmieren oder Änderungen vornehmen.

Aus DE 10 2011 015 605 A1 ist ein Heimnetzwerk zur Ansteuerung von Geräten bekannt, wobei ein Steuergerät in Abhängigkeit von Eingangsgrößen, die über Sensoren bereitgestellt werden, Geräte ansteuert. Sensoren sind in DE 10 2011 015 605 A1 beispielsweise Lichtschalter. Das betätigen eines Lichtschalters im Flur kann beispielsweise das Einschalten des Lichts in der Garage bewirken. Damit der Benutzer das Licht auch wieder ausschaltet, wird ihm über eine Anzeige der Steuereinheit dargestellt, in welchen Räumen das Licht brennt.

Die in DE 10 2011 015 605 A1 beschriebene Ansteuerung von Heimnetzwerken ermöglicht die Ansteuerung von Geräten oder Einrichtungen durch die aktive Auswahl durch einen Benutzer oder durch Erfassen von Zuständen durch einen Sensor. Weitergehende Steuerungsmöglichkeiten werden darin nicht offenbart.

Nachteilig bei dem aus dem Stand der Technik bekannten Heimautomatisierungsnetzwerken ist es, dass diese aufwendig programmiert werden müssen und deren Steuerung für einen Benutzer oftmals sehr schwierig ist.

Aufgabe der vorliegenden Erfindung ist es daher, ein Verfahren zum Steuern eines Heimautomatisierungsnetzwerkes, ein Steuergerät für ein Heimautomatisierungsnetzwerk und ein Heimautomatisierungsnetzwerk anzugeben, wobei ein Nutzer keine aufwendige Programmierung vornehmen muss und die Steuerung des Heimautomatisierungsnetzwerkes sich adaptiv an das Verhalten eines Lebewesen, das sich in dem das Heimautomatisierungsnetzwerk umfassenden Gebäude bewegt, anpasst.

Erfindungsgemäß wird die Aufgabe durch ein Verfahren mit den in Anspruch 1 angegebenen technischen Merkmalen, durch eine Steuereinrichtung mit den im Anspruch 11 angegebenen technischen Merkmalen und durch ein Heimautomatisierungsnetzwerk mit den im Anspruch 18 angegebenen technischen Merkmalen gelöst.

Vorteilhafte Weiterbildungen der Erfindung sind in den Unteransprüchen im Detail angegeben.

Bei einem erfindungsgemäßen Verfahren zum Steuern eines Heimautomatisierungsnetzwerks, aufweisend eine Vielzahl von elektrischen und elektronischen Geräten und Einrichtungen, wobei mindestens eine Steuereinrichtung vorgesehen ist, die dazu ausgebildet ist, die elektrischen und elektronischen Geräte und Einrichtungen zu steuern, wobei die mindestens eine Steuereinrichtung mindestens eine Bild- und Ton-Erfassungseinrichtung aufweist und die mindestens eine Steuereinrichtung mit den elektrischen und elektronischen Geräten und Einrichtungen verbunden ist, werden folgende Schritte ausgeführt:
- Erfassen mindestens eines Lebewesens durch die mindestens eine Bild- und Ton-Erfassungseinrichtung, wobei die Steuereinrichtung dem erfassten Lebewesen entsprechende Daten erzeugt, und Speichern der Daten in der Steuereinrichtung,
- Erfassen der Position des mindestens einen Lebewesens durch die mindestens eine Bild- und Ton-Erfassungseinrichtung, wobei die Steuereinrichtung der Position entsprechende Daten erzeugt, und Speichern der Daten in der Steuereinrichtung,
- Erfassen von Schaltzuständen der elektrischen und elektronischen Geräte und Einrichtungen und deren Betriebsparameter, die von dem mindestens einen Lebewesen vorgenommen werden, wobei die Steuereinrichtung den Schaltzuständen und Betriebsparametern entsprechende Daten erzeugt, und Speichern der Daten in der Steuereinrichtung,
- Erstellen einer Szene in Abhängigkeit der gespeicherten Daten unter Verwendung des Datums, der Uhrzeit und des mindestens einen Lebewesens und Speichern der Szene in der Steuereinrichtung,
- Vergleichen der durch die Bild- und Ton-Erfassungseinrichtung erfassten Daten, das Datum, Uhrzeit und das mindestens eine Lebewesen mit den Daten einer bereits gespeicherten Szene durch die Steuereinrichtung,
- Aufrufen der gespeicherten Szene und Betreiben der elektrischen und elektronischen Geräte und Einrichtungen nach Maßgabe der gespeicherten Szene durch die Steuereinrichtung, wenn die erfassten Daten mit den gespeicherten Daten im Wesentlichen übereinstimmen, und
- Speichern einer neuen Szene in der Steuereinrichtung, wenn die erfassten Daten mit den gespeicherten Daten im Wesentlichen nicht übereinstimmen.

Zur Steuerung des Heimautomatisierungsnetzwerkes ist es nicht erforderlich, vor Inbetriebnehmen der Steuerung Einstellungen vorzugeben oder Betriebsparameter einzustellen. Optional kann vor dem ersten Inbetriebnehmen der Steuereinrichtung ein Lebewesen, z. B. ein Benutzer, der Steuereinrichtung bekannt gemacht werden, wobei eine Personalisierung erfolgt. Die Steuereinrichtung ist mit den elektrischen und elektronischen Geräten und Einrichtungen verbunden, so dass die elektrischen und elektronischen Geräte und Einrichtungen von der Steuereinrichtung gesteuert werden können und die Steuereinrichtung Benutzereingaben sowie Betriebsparameter zur Steuerung der elektrischen und elektronischen Geräte und Einrichtungen durch die Verbindung mit den Geräten und Einrichtungen sowie über die mindestens eine Bild- und Ton-Erfassungseinrichtung erhält.

Wird die Steuereinrichtung in Betrieb genommen, erfasst sie sowohl die Position des Benutzers als auch dessen Bewegungsabläufe und Verhalten. Zudem erfasst die Steuereinrichtung die Schaltzustände der elektrischen und elektronischen Geräte und Einrichtungen und deren Betriebsparameter. Die Steuereinrichtung speichert diese Daten unter Verwendung des aktuellen Datums, der Uhrzeit und den Bezug zum Lebewesen. Daraus erzeugt die Steuereinrichtung eine Szene, welche die erfassten Daten enthält. Beispielsweise erfasst die Steuereinrichtung, dass ein Benutzer um 6 Uhr abends nach Hause kommt und als erstes ins Wohnzimmer geht und das Fernsehgerät einschaltet. Beim erstmaligen Betrieb der Steuereinrichtung nimmt die Steuereinrichtung keine Beeinflussung der Betriebsparameter und Schaltzustände vor. Kommt der Benutzer am nächsten Tag wieder in etwa zur gleichen Uhrzeit nach Hause, veranlasst die Steuereinrichtung die Inbetriebnahme des Fernsehgerätes. Vorzugsweise veranlasst die Steuereinrichtung die Wiedergabe von Musikvideos, welche von dem Nutzer bereits am Tag davor ausgewählt worden sind. Die Betriebsparameter umfassen in diesem Beispiel die Musikvideos und die Lautstärke mit der sie wiedergegeben werden. Die Steuereinrichtung hat anhand der aufgenommenen Daten eine Szene erstellt und steuert den Betrieb der elektrischen und elektronischen Geräte und Einrichtungen am nächsten Tag nach Maßgabe der gespeicherten Szene. Durch das Speichern des Datums und der Uhrzeit lernt die Steuereinrichtung auch, ob sich beispielsweise das Verhalten eines Benutzers regelmäßig auf Arbeitstage oder Wochenenden und Feiertage bezieht. Ferner sind die gespeicherten Szenen von der Uhrzeit abhängig. Ändert der Benutzer sein Verhalten und den Betrieb von elektrischen und elektronischen Geräten und Einrichtungen, so lernt die Steuereinrichtung das neue Verhalten und speichert eine neue Szene. Darüber hinaus kennt die Steuereinrichtung unterschiedliche Jahreszeiten durch einen Zugriff auf einen Kalender, wobei über die mindestens eine Bild- und Ton-Erfassungseinrichtung auch die Helligkeit eines Raums erfasst wird. So lernt die Steuereinrichtung, ab welchem Helligkeitsgrad der Benutzer regelmäßig einen Lichtschalter betätigt. Wird dieser Wert unterschritten, so schaltet die Steuereinrichtung eine bestimmte Anzahl von Lampen automatisch ein, wenn der Benutzer nach Hause kommt oder einen Raum betritt.

Die Steuereinrichtung lernt beispielsweise auch, ab welchem Sonnenstand ein Benutzer beispielsweise die Rollläden der Fenster des Wohnzimmers herunterfährt. Anders als beispielsweise in DE 10 2011 015 605 A1 offenbart, wobei darin angegeben ist, dass das Öffnen und Schließen von Rollläden auf Basis von hinterlegten Sonnenstandstabellen vorgenommen wird, bildet die Steuereinrichtung eine Szene unter Verwendung der Vorlieben bzw. typischen Handlung eines Benutzers. Hierbei wird auch berücksichtigt, ob beispielsweise auch die Sonne scheint. So könnte bei einer fest vorgegebenen Tabelle ein Schließen der Rollläden vorgenommen werden, wobei dies nicht dem typischen Verhalten eines Benutzers entspricht. So kann das Schließen der Rollläden beispielsweise von einem Benutzer auch nur dann vorgenommen werden, wenn er zugleich einen Film ansehen möchte. Die einzelnen Daten, die von der Steuereinrichtung aufgenommen werden, werden zu einer Szene verknüpft, wobei die Steuereinrichtung automatisch den Betrieb der elektrischen und elektronischen Geräte und Einrichtungen nach Maßgabe einer gespeicherten Szene vornimmt, wenn die von der Steuereinrichtung erfassten Daten im Wesentlichen mit den gespeicherten Daten einer Szene übereinstimmen. Die Steuereinrichtung kann die erfassten Daten und generierten Szenen auch an einen Server weiterleiten, in dem die Daten und Szenen gespeichert werden. Zum Abgleich von erfassten Daten und zum Aufrufen von Szenen greift die Steuereinrichtung dann auf den Server zu.

Die Steuereinrichtung bewirkt eine adaptive Steuerung des Heimautomatisierungsnetzwerkes, ohne dass ein Benutzer manuelle Vorgaben durch eine Programmierung oder anderweitig durchführen muss. Die Steuereinrichtung kann darüber hinaus auch eine Schnittstelle aufweisen, über welche die in der Steuereinrichtung gespeicherten Szenen zusätzlich manuell verändert werden können. Dies dient beispielsweise auch dazu, die Akzeptanz bei Benutzern zu erhöhen, so dass diese jederzeit die Steuerung des Heimautomatisierungsnetzwerkes beeinflussen können (z.B. Deaktivierung).

Eine Szene kann in Abhängigkeit der Dauer des Aufenthalts eines Lebewesens in einem Raum eines Hauses, in Abhängigkeit eines vorgebbaren Zeitraums, in Abhängigkeit einer Position eines Lebewesens, in Abhängigkeit des Betriebs mindestens eines elektrischen und elektronischen Geräts oder einer Einrichtung und/oder in Abhängigkeit einer Handlung eines Lebewesens gespeichert werden. Die Szenen können dabei nur eine geringe Anzahl von Daten aufweisen oder einen kurzen Abschnitt umfassen oder sich über einen längeren Zeitraum erstrecken, in dem mehrere Aktionen beispielsweise des Benutzers durchgeführt werden. Je feiner eine Unterteilung ist, desto genauer kann ein Erkennen einer bereits gespeicherten Szene vorgenommen werden. Ferner kann die Steuereinrichtung beispielsweise mehrere Gruppen von kleineren Szenen in deren Zusammenhang bewerten, um festzustellen, ob der Betrieb der elektrischen und elektronischen Geräte und Einrichtungen nach mindestens einer dieser Szenen oder dem Verbund dieser Szenen erfolgen soll.

Weiterhin können für einzelne Lebewesen gespeicherte Szenen durch die Steuereinrichtung kombiniert werden und die elektrischen und elektronischen Geräte und Einrichtungen nach Maßgabe der kombinierten Szene betrieben werden. Sind in der Steuereinrichtung für zwei Benutzer jeweils separat Szenen gespeichert und befinden sich die beiden Benutzer gemeinsam in einem Raum, so kombiniert die Steuereinrichtung die für die jeweiligen Benutzer gespeicherten Szenen. Beispielsweise wird für einen Benutzer 1 im Wohnzimmer das Fernsehgerät eingeschaltet und für einen Benutzer 2 eine Leselampe eingeschaltet. Die Steuereinrichtung leitet aus den gespeicherten Szenen die jeweiligen Schaltzustände und Betriebsparameter ab, die für die einzelnen Benutzer gespeichert sind. Würden sich bei der Kombination zweier einzelner Szenen Widersprüche über den Betrieb einzelner Geräte und Einrichtungen ergeben, so nimmt die Steuereinrichtung keine Veränderung des Schaltzustands vor. Infolgedessen werden die beiden Benutzer oder nur einer der Benutzer eine bestimmte Handlung vornehmen, so dass beispielsweise der Betrieb des Fernsehgerätes unterbleibt. Die Steuereinrichtung speichert die kombinierten Szenen unter Berücksichtigung der neu aufgenommenen und gespeicherten Daten.

Die Steuereinrichtung kann über die Bild- und Ton-Erfassungseinrichtung auch Gesten oder Haltungen des Nutzers erfassen. So veranlasst beispielsweise die Steuereinrichtung ein Dimmen des Wohnzimmerlichts, wenn ein Benutzer sich von einer sitzenden Position in eine liegende Position auf einer Couch verbringt.

Gespeicherte Szenen können angepasst werden, wenn sich Schaltzustände und/oder Betriebsparameter der elektrischen und elektronischen Geräte und Einrichtungen für gespeicherte Szenen ändern. Hierbei kann eine gespeicherte Szene im Wesentlichen beibehalten werden, ohne dass eine neue Szene erstellt wird, wobei vorgenommene Änderungen (beispielsweise Wiedergabe von Audio-Inhalten) sich ändern. Die Steuereinrichtung kann auch über eine Internetverbindung Informationen darüber haben, welche Lieder momentan aktuell sind. Hört sich ein Benutzer regelmäßig aktuelle Lieder an, so passt die Steuereinrichtung die Wiedergabeliste in Abhängigkeit der über die Internetverbindung verfügbaren Informationen an. Die Steuereinrichtung kann auch über Videotext derartige Informationen empfangen.

Darüber hinaus ist es möglich, dass die Steuereinrichtung weitere Parameter aufnimmt und daraus Daten erzeugt und die Daten in der Steuereinrichtung zur Erzeugung von Szenen gespeichert werden. In dem vorstehend genannten Beispiel wird die Wiedergabe von aktuellen Liedern in der Steuereinrichtung gespeichert. Die tatsächlich wiedergegebenen Lieder können hierbei entweder über einen Speicher oder andere Einrichtungen aus dem Heimautomatisierungsnetzwerk bezogen werden (Festplatte, DVD, CD, etc.) oder per Livestream aus dem Internet (z. B. YouTube).

Die weiteren Parameter können umweltspezifische, ereignisspezifische, handlungsspezifische und/oder personenspezifische Daten sein. Umweltspezifische Parameter sind beispielsweise Außentemperatur, Windgeschwindigkeit, Niederschlagsmenge, Sonnenstand, Bewölkung und Luftfeuchtigkeit. Ereignisspezifische Parameter können beispielsweise Feiertage oder Verkehrsmeldungen sein. Beispielsweise kann die Steuereinrichtung Verkehrsdaten über die Route empfangen, welche der Benutzer jeden Tag zur Arbeit fährt und die der Steuereinrichtung vom Benutzer mitgeteilt worden ist. Ist auf dieser Route mit einer Verzögerung von etwa 20 Minuten auf Grund eines Staus zu rechnen, so veranlasst die Steuereinrichtung die Aktivierung eines Weckers 20 Minuten früher. Hierbei berücksichtigt die Steuereinrichtung, ob beispielsweise ein Feiertag oder Wochenende ist. Handlungsspezifische Parameter können die Gesten von Lebewesen sein. Personenspezifische Daten können beispielsweise die Geschwindigkeit eines Benutzers sein, mit welcher er sich bewegt. Personenspezifische Daten umfassen zudem die Kleidung. Über die von der Kamera aufgenommenen Bilddaten kann festgestellt werden, ob eine Person hell oder dunkel gekleidet ist. Auch um welche Art von Kleidung es sich handelt, kann mit entsprechender Software durch Erkennen bestimmter Merkmale oder Muster bestimmt werden (z.B. Anzug). Die vorstehend aufgezählten Parameter umfassen auch andere Daten als die beispielhaft aufgeführten Parameter. Die Steuereinrichtung kann gespeicherte Szenen in Abhängigkeit der weiteren Parameter ändern. So kann die Steuereinrichtung beispielsweise in Abhängigkeit der Außentemperatur eine Heizung derart ansteuern, dass im Badezimmer eine Temperatur von 22°C vorherrscht. Die Steuereinrichtung hat hierbei gelernt, dass der Benutzer morgens (beispielsweise Werktags) stets manuell eine Temperatur von 22°C einstellt. Um diese Temperatur im Badezimmer einzustellen, muss die Steuereinrichtung demnach auch die Heizung in Abhängigkeit der Außentemperatur betreiben.

Dabei kann die Änderung einer Szene eine Änderung eines Schaltzustands und/oder mindestens eines Betriebsparameters mindestens eines der elektrischen oder elektronischen Geräte und Einrichtungen bewirken. Hierbei erfolgt nach der Änderung einer Szene die Änderung der Betriebsparameter für die Heizung.

Die Änderung der Szene kann gespeichert werden und die Änderung kann für einen bestimmbaren Zeitraum oder ein einmaliges Ereignis eine Adaption der Szene bewirken. Bei dem Beispiel der Heizung für das Badezimmer können die geänderten Betriebsparameter der Szene gespeichert werden. Die Änderung kann aber auch nur für einen bestimmbaren Zeitraum vorgenommen werden, wobei die Parameter für die Heizung danach wieder auf ihren vorhergehenden Wert zurückgesetzt werden. Ferner kann die Änderung ein einmaliges Ereignis sein. Dabei wird der Betriebsparameter für die Heizung zur Einstellung der Temperatur (beispielsweise 22°C) jedes Mal neu ermittelt.

Die eingangs genannte Aufgabe wird auch durch eine Steuereinrichtung zur Durchführung eines der vorstehend genannten Verfahren gelöst, wobei die Steuereinrichtung mindestens eine Bild- und Ton-Erfassungseinrichtung aufweist und die mindestens eine Steuereinrichtung mit elektrischen und elektronischen Geräten und Einrichtungen eines Heimautomatisierungsnetzwerks zur Steuerung der elektrischen und elektronischen Geräte und Einrichtungen verbunden ist.

Die mindestens eine Steuereinrichtung kann als separates Steuergerät ausgebildet sein.

Das separate Steuergerät kann in einem Raum installiert oder ein mobiles Steuergerät sein. Ein mobiles Steuergerät kann beispielsweise von einem Nutzer zumindest für einen bestimmten Zeitraum mitgenommen werden und sich immer in dem Raum befinden, in welchem sich der Benutzer aufhält. Ein fest installiertes Steuergerät kann beispielsweise über einen Adapter an einer Wand montiert sein. Der Adapter stellt hierbei auch die Schnittstelle zur Kommunikation mit den elektronischen und elektrischen Geräten und Einrichtungen zumindest für einen Teil dieser Geräte und Einrichtungen dar. Auch ein mobiles Steuergerät kann mit einem Adapter verbunden werden.

Sind in einem Haushalt mehr als eine Steuereinrichtung vorhanden, so kommunizieren diese Steuereinrichtungen über das Heimautomatisierungsnetzwerk oder über ein anderes verfügbares Kommunikationsnetzwerk, um den Benutzer von einer Steuereinrichtung zur nächsten weiterzureichen und Zugriff auf die gespeicherten Daten und Szenen zu haben. Diese Steuereinrichtungen bilden dann ein Netzwerk.

Die mindestens eine Bild- und Ton-Erfassungseinrichtung zur Erfassung von Lebewesen kann eine Kamera und ein Mikrophon aufweisen. Mit einer entsprechenden Auswertung der durch die Kamera und das Mikrophon aufgenommenen Daten kann eine Vielzahl von Bewegungsprofilen von Lebewesen erfasst werden. Darüber hinaus können über eine entsprechende Auswertesoftware auch Gesteneingaben des Lebewesens erfasst werden.

Hierzu kann die mindestens eine Steuereinrichtung dazu ausgebildet sein, Gesten und Bewegungen eines Lebewesens zu erfassen und daraus handlungsspezifische Daten zu generieren.

Die mindestens eine Steuereinrichtung kann mit den elektrischen und elektronischen Geräten und Einrichtungen über eine drahtlose Funkverbindung und/oder über elektrische Verbindungen des Heimautomatisierungsnetzwerks verbunden sein. Beispielsweise können auch Leitungen zur Stromversorgung als Signal- und Datenleitungen verwendet werden.

Die mindestens eine Steuereinrichtung kann zusätzliche sensorische Einheiten zur Erfassung von Parametern aufweisen. Ferner kann die mindestens eine Steuereinrichtung auch Daten von externen Einheiten empfangen. Beispielsweise kann die Steuereinrichtung Daten von einem Bewegungsmelder empfangen. Die Daten können hier beispielsweise das Ein- oder Ausschalten des mit dem Bewegungsmelder gekoppelten Lichts sein.

Ferner wird die eingangs genannte Aufgabe durch ein Heimautomatisierungsnetzwerk gelöst, welches mindestens eine Steuereinrichtung der vorstehend beschriebenen Varianten und eine Vielzahl von elektrischen und elektronischen Geräten und Einrichtungen aufweist, wobei die mindestens eine Steuereinrichtung dazu ausgebildet ist, die elektrischen und elektronischen Einrichtungen zu steuern, mindestens eine Bild- und Ton-Erfassungseinrichtung aufweist und mit den elektrischen und elektronischen Geräten und Einrichtungen verbunden ist.

Bei einem Heimautomatisierungsnetzwerk können beispielsweise auch in jedem Raum Steuereinrichtungen angeordnet sein. Die elektrischen und elektronischen Geräte und Einrichtungen umfassen in einer nicht erschöpfenden Aufzählung beispielsweise Beleuchtungseinrichtungen, unterhaltungselektronische Geräte, Küchengeräte, Haushaltsgeräte, Geräte der Telekommunikation, elektrische Antriebe und Steuerungen für Heizungen und Sanitäranlagen.

Weitere Vorteile, Merkmale sowie Ausgestaltungsmöglichkeiten ergeben sich aus der nachfolgenden Figurenbeschreibung von nicht einschränkend zu verstehenden Ausführungsbeispielen.

In Zeichnungen zeigt:
- Fig. 1: eine schematische Ansicht einer Steuereinrichtung mit verbundenen Einrichtungen und Geräten; und
- Fig. 2: einen Teil eines Heimautomatisierungsnetzwerkes.

In den Figuren mit gleichen Bezugszeichen versehende Teile und Komponenten entsprechen im Wesentlichen einander, solange nichts anderes angegeben ist.

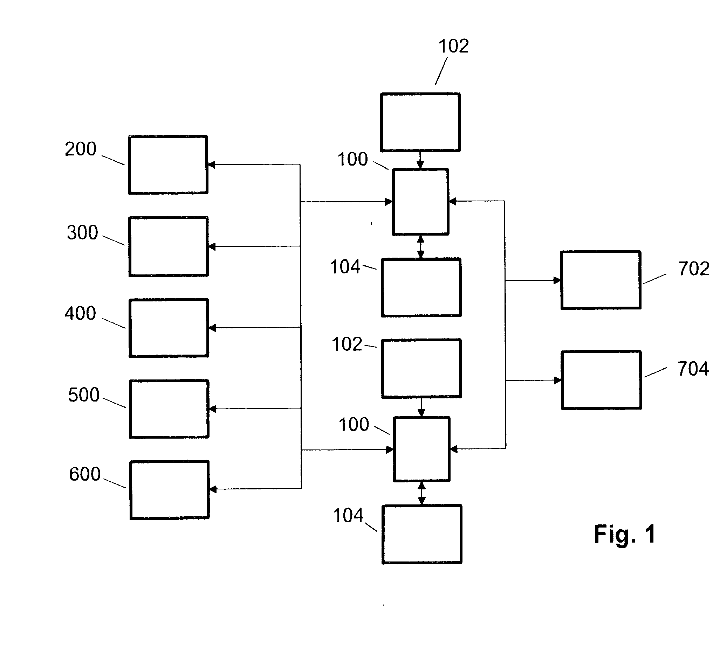

Fig. 1 zeigt eine schematische Ansicht zweier Steuereinrichtungen 100 und mit den Steuereinrichtungen 100 verknüpfte Einrichtungen sowie parameterliefernde Einrichtungen und Komponenten.

Die Steuereinrichtungen 100 weisen eine Bild- und Ton-Erfassungseinrichtung 102 und einen internen Speicher 104 auf. Die Bild- und Ton-Erfassungseinrichtungen 102 weisen mindestens eine Kamera und ein Mikrophon auf. Ferner ist in den Steuereinrichtungen 100 jeweils eine Steuerschaltung zum Verarbeiten der aufgenommenen Daten vorgesehen. Über die Bild- und Ton-Erfassungseinrichtungen 102 werden optisch und akustisch Lebewesen, beispielsweise Bewohner eines Hauses und Haustiere erfasst. Ferner können hierüber auch Lebewesen anhand ihrer Bewegungsgeräusche erfasst werden, selbst dann, wenn sie nicht durch eine Kamera der Bild- und Ton-Erfassungseinrichtung 102 erfasst werden können. Es ist darüber hinaus auch möglich zu unterscheiden, ob das Lebewesen ein Bewohner eines Hauses oder ein Haustier ist. Ferner kann eine Unterscheidung von Bewohnern und Haustieren anhand der Schrittgeräusche (z. B. Schuhe) erfolgen. Die Steuereinrichtung 100 muss beispielsweise nicht nach dem Erfassen von Schrittgeräuschen über die Bild- und Ton-Erfassungseinrichtung 102 eine Person oder ein Haustier identifizieren, sondern kann beispielsweise die Benutzereingaben einer Person mit den Schrittgeräuschen kombinieren.

Die von den Bild- und Ton-Erfassungseinrichtungen 102 erfassten Daten werden in dem Speicher 104 der Steuereinrichtungen 100 und ebenfalls auf einem Server 704 gespeichert. Die Steuereinrichtungen 100 speichern zudem das Datum und die aktuelle Uhrzeit ab. Hieraus ergibt sich auch die Dauer von Handlungen, die durch Lebewesen vorgenommenen werden bzw. wurden. Der Server 704 kann ein externer Server oder ein Server des Heimautomatisierungsnetzwerks sein.

Die Steuereinrichtungen 100 erhalten ferner von einer Wetterstation 702 und dem Server 704 Informationen und können auch gezielt auf die Wetterstation 702 und den Server 704 zugreifen, um Informationen abzufragen. Diese abgefragten bzw. empfangenen Informationen von der Wetterstation 702 und dem Server 704 können auch in den Speichern 104 der Steuereinrichtungen 100 gespeichert werden.

Die Steuereinrichtungen 100 können auch mit anderen Einrichtungen verbunden sein, die Informationen über umweltspezifische, ereignisspezifische, handlungsspezifische oder personenspezifische Daten bereitstellen. Ferner müssen in weiteren Ausführungsformen die Steuereinrichtungen 100 nicht mit einer Wetterstation 702 und einem Server 704 verbunden sein, sondern können auch nur über die von einem Benutzer vorgenommenen Schaltzustände und Betriebsparameter von elektrischen und elektronischen Geräten und Einrichtungen gesteuert werden. Auch kann nur eine Steuereinrichtung 100 mit der Wetterstation 702 und/oder dem Server 704 verbunden sein. Weiterhin können die Steuereinrichtungen 100 bspw. Einrichtungen zur Erfassung der Temperatur und Luftfeuchtigkeit aufweisen.

Damit der Speicher 104 nicht überfüllt wird oder um eine Archivierung der Daten zu ermöglichen, können Daten in Speichern von Geräten (z.B. externe Festplatte; Festplatte Fernsehgerät; Festplatte PC; etc.) des Heimautomatisierungsnetzwerks abgelegt werden. Zusätzlich oder alternativ dazu kann in einem Speicher 104 ein Link zu den Daten und/oder zu Webseiten hinterlegt sein.

Die Steuereinrichtungen 100 sind über Funkverbindungen und/oder Leitungen mit Beleuchtungseinrichtungen 200, mit Rollläden 300, unterhaltungselektronischen Geräten 400, Haushaltsgeräten 500 und elektrischen Geräten 600 verbunden. Die Steuereinrichtungen 100 empfangen von den Beleuchtungseinrichtungen 200, den Rollläden 300, den unterhaltungselektronischen Geräten 400, den Haushaltsgeräten 500 und den elektrischen Geräten 600 deren Schaltzustände (beispielsweise "an", "aus", "Standby") und deren Betriebsparameter (beispielsweise wiedergegebene Audiodateien, Temperatureinstellungen bei Heizkörpern, Stellung von Rollläden ...). Die Steuereinrichtungen 100 können ferner mit weiteren Einrichtungen verbunden sein. Beispielsweise sind hier auch die Heizungsanlage und einzelne Heizkörper oder andere Heizeinrichtungen (beispielsweise Fußbodenheizung) zu nennen.

Die Steuereinrichtungen 100 sind dazu ausgebildet, die empfangenen Schaltzustände und Betriebsparameter zu erfassen und entsprechende Daten zu erzeugen, die in den Speichern 104 und auf einem Server 704 unter Berücksichtigung des aktuellen Datums und der Uhrzeit gespeichert werden. Diese Daten werden zusammen mit den von den Bild- und Ton-Erfassungseinrichtungen 102 erzeugten Daten abgelegt. Die Steuereinrichtungen 100 bilden dann aus den zu einem bestimmten Zeitpunkt oder Zeitraum erfassten Daten in Zusammenhang mit der Benutzung eine Szene und speichern diese Szene im Speicher 104 und auf einem Server 704.

Beispielsweise werden über eine Bild- und Ton-Erfassungseinrichtung 102 eine Person und deren Position aufgenommen sowie festgestellt, dass die Person einen bestimmten Lichtschalter betätigt hat. Das Betätigen des Lichtschalters erfolgt zu einer bestimmten Uhrzeit an einem bestimmten Tag von einer Person. Die Steuereinrichtung 100 speichert diese Szene im Speicher 104 und auf einem Server 704. Befindet sich diese Person am nächsten Tag in einer ähnlichen Position, so veranlasst die Steuereinrichtung 100 das Anschalten des dem Lichtschalter zugeordneten Beleuchtungselementes nach Maßgabe der vom Vortag gespeicherten Szene.

Die Steuereinrichtungen 100 müssen demnach nicht angelernt werden, sondern speichern die vorgenommenen Einstellungen, Schaltzustände und Betriebsparameter der elektrischen und elektronischen Geräte und Einrichtungen unter Verwendung des aktuellen Datums und der Uhrzeit. Hierbei wird von den Steuereinrichtungen 100 ein Betrieb der elektrischen und elektronischen Geräte und Einrichtungen nach Maßgabe einer in den Speichern 104 und/oder im Server 704 gespeicherten Szene durchgeführt, wenn die für die Szene relevanten Daten bzw. Informationen mit den aktuell vorliegenden erfassten und empfangenen Daten bzw. Informationen übereinstimmen. Die relevanten Daten bzw. Informationen umfassen beispielsweise den Benutzer, die Position des Benutzers, die Uhrzeit und den Wochentag. Ferner kann auch das Ein- oder Ausschalten eines Lichtschalters oder das Ein- oder Ausschalten eines elektrischen Gerätes bewirken, dass eine Steuereinrichtung 100 ein weiteres Gerät ein- oder ausschaltet. Die adaptive Heimgerätesteuerung benötigt daher kein Anlernen und keine Vorgaben, wie Geräte und Einrichtungen zu steuern sind, sondern erfasst die von einem Benutzer vorgenommenen Betriebsweisen der elektrischen und elektronischen Geräte und Einrichtungen und betreibt die Geräte und Einrichtungen nach Maßgabe einer gespeicherten Szene, wenn bestimmte Kriterien erfüllt sind.

Es ist dabei nicht notwendig, dass alle für eine Szene gespeicherten Daten durch aktuell vorliegende Daten bestätigt sind. Es wird von einer Steuereinrichtung 100 erkannt, dass mehrere Zustände vorliegen, die durch entsprechende Daten belegt sind. Bspw. ist eine Person erkannt worden, die sich zu einem bestimmten Zeitpunkt oder innerhalb eines bestimmten Zeitraums in einer bestimmten Position befindet und eine bestimmte Handlung vornimmt. Dann vergleicht die Steuereinrichtung 100 diese Informationen mit abgespeicherten Daten und stellt fest, dass für die Person, zu dieser Zeit an dieser Position und beim Ausführen dieser Handlung eine Szene gespeichert ist, wobei in der Szene zusätzlich gespeichert ist, dass ein Gerät eingeschaltet wird. Bevor die Person das Gerät einschaltet, veranlasst die Steuereinrichtung 100 das Einschalten dieses Geräts, weil die gespeicherten Daten mit den erfassten Daten im Wesentlichen übereinstimmen und es sehr wahrscheinlich ist, dass die Person das Gerät einschalten will. Die Handlung kann bspw. das Bewegen der Person in eine Richtung (z.B. in Richtung der Couch des Wohnzimmers) oder das Setzen oder Hinlegen der Person auf die Couch sein.

In Fig. 1 sind die Steuereinrichtungen 100 jeweils mit allen elektrischen und elektronischen Geräten und Einrichtungen verbunden dargestellt. Jedoch trifft diese Darstellung nicht für alle Ausführungen zu. In einem Heimautomatisierungsnetzwerk mit einer Vielzahl von Räumen, wobei im Wesentlichen in jedem Raum eine Steuereinrichtung 100 vorgesehen ist, ist jede Steuereinrichtung 100 nur mit den elektrischen und elektronischen Geräten und Einrichtungen verbunden, die durch die jeweilige Steuereinrichtung 100 gesteuert werden sollen. Gleichfalls sind die jeweiligen Steuereinrichtungen 100 auch nur mit den Einrichtungen (z.B. Wetterstation 702) verbunden, die zur Steuerung erforderlich sind. In weiteren Ausführungsformen kann eine Steuereinrichtung 100 als Hauptsteuereinrichtung ausgebildet sein und Informationen an die weiteren Steuereinrichtungen weiterleiten. Dies kann sowohl durch eine Anfrage an die Hauptsteuereinrichtung als auch durch eine automatische Bereitstellung der Informationen an die weiteren Steuereinrichtungen 100 erfolgen.

In einem Haus mit einer Vielzahl von Räumen ist im Regelfall eine Steuereinrichtung 100 nur mit einem Teil der elektrischen und elektronischen Geräte und Einrichtungen verbunden. Bspw. ist eine im Wohnzimmer eines Hauses angeordnete Steuereinrichtung 100 nur mit den Rollläden 300, den Lampen und den Geräten des Wohnzimmers verbunden. Jedoch kann, in Abhängigkeit der Ausgestaltung in Bezug auf Größe und Raumaufteilung, auch nur eine Steuereinrichtung 100 vorgesehen sein.

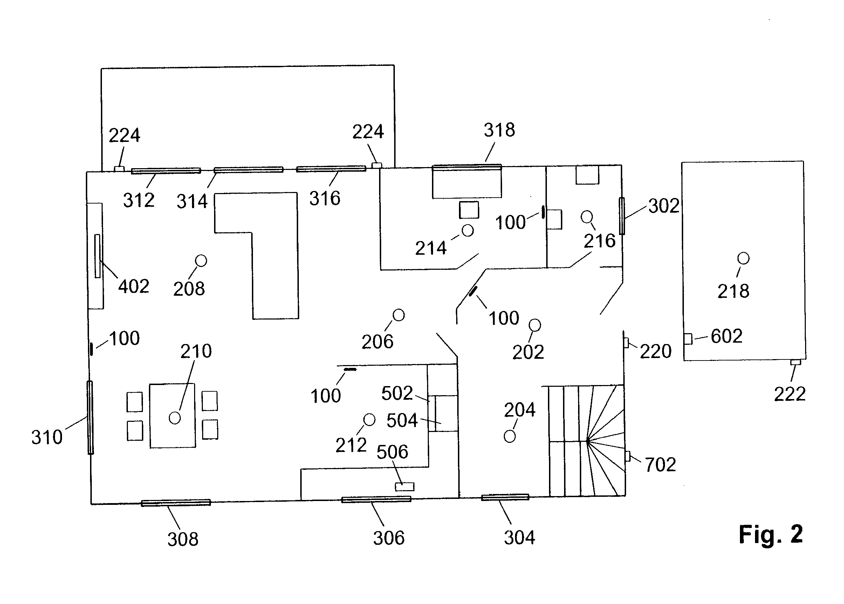

Fig. 2 zeigt einen Teil eines Heimautorisierungsnetzwerkes. Fig. 2 zeigt insbesondere einen schematischen Grundriss des Erdgeschosses eines Einfamilienhauses sowie den Grundriss einer Garage.

Im Eingangsbereich der in Fig. 2 dargestellten Wohnebene ist eine Steuereinrichtung 100 angeordnet. Weitere Steuereinrichtungen 100 sind in einem Arbeitszimmer, in einem Wohn- und Essbereich und in einer Küche angeordnet. Die Steuereinrichtungen 100 weisen eine Bild- und Ton-Erfassungseinrichtung 102 und einen Speicher 104 auf. Ferner weisen die Steuereinrichtung 100, wie die Steuereinrichtungen 100 aus Fig. 1, weitere Komponenten und Bestandteile auf, die hier nicht näher beschrieben werden. Beispielsweise weisen die Steuereinrichtungen 100 einen Prozessor, eine Kommunikationseinheit und weitere Bestandteile auf, die zur Verarbeitung der Daten bzw. Informationen und zum Steuern der elektrischen und elektronischen Geräte und Einrichtungen dienen. Darüber hinaus ist ein Server 704 vorgesehen (siehe Fig. 1), der in Fig. 2 nicht dargestellt ist. In dem Server werden die erfassten Informationen und generierten Szenen als Daten abgespeichert.

Im Eingangsbereich der Wohnebene ist eine Lampe 202 vorgesehen. Eine weitere Lampe 204 befindet sich im Bereich des Treppenaufgangs. Eine Lampe 206, eine Lampe 208, eine Lampe 210 und eine Lampe 212 sind im Wohn- und Essbereich der Wohnebene vorgesehen. Eine weitere Lampe 214 ist in einem Arbeitszimmer und eine weitere Lampe 216 ist in einem Gäste-WC angeordnet. Darüber hinaus umfassen die Beleuchtungseinrichtungen 200 Lampen 220, 222 und 224 zur Außenbeleuchtung. Die Lampen 224 dienen zur Beleuchtung einer Terrasse, wobei die Lampe 220 zur Beleuchtung des Eingangsbereichs dient. Die Lampe 222 ist an der Garage angeordnet.

Für die Fenster der Wohnebene sind Rollläden 302 bis 318 vorgesehen. Die Rollläden 300 sind elektrisch über einen Elektromotor ansteuerbar. Als Beispiel für unterhaltungselektronische Geräte befindet sich in einem Wohnzimmer ein Fernsehgerät 402. Als Beispiel für Haushaltsgeräte 500 befinden sich in der Küche ein Herd 502, eine Dunstabzugshaube 504 sowie eine Kaffeemaschine 506. Als weitere elektrische Geräte 600 ist ein Motor für ein Garagentor 602 vorgesehen. Zudem ist an der Außenseite einer Hauswand eine Wetterstation 702 angeordnet, die wetterspezifische Daten (Temperatur, Luftfeuchtigkeit, Luftdruck, Windgeschwindigkeit, etc.) an eine Steuereinrichtung 100 oder an das Netzwerk der Steuereinrichtungen 100 sendet. Die vorstehend nur beispielhaft aufgeführten Einrichtungen (Beleuchtungseinrichtungen 200, Rollläden 300, unterhaltungselektronische Geräte 400, Haushaltsgeräte 500, elektrische Geräte 600) sind mit den zugehörigen Steuereinrichtungen 100 über Steuerleitungen, Stromleitungen oder Funkverbindungen verbunden. Bspw. kann eine Steuereinrichtung 100 mit Funkfernbedienungen für die einem Raum zugeordneten Rollläden 300 (bspw. Rollladen 318 des Arbeitszimmers, der mit der Steuereinrichtung 100 des Arbeitszimmers verbunden ist) verbunden sein und den Betrieb der Rollläden 300 über die Funkfernbedienungen steuern. Eine Steuereinrichtung 100 kann hierzu die Funksignale für die Rollläden 300 empfangen und erhält daher Informationen über das Öffnen und Schließen der Rollläden 300. Um ein Öffnen und Schließen der Rollläden 300 durch eine Steuereinrichtung 100 vorzunehmen, sendet diese Steuereinrichtung 100 Signale zum Öffnen und Schließen an Empfänger der Rollläden 300 oder an Empfänger der Funkfernbedienungen. Die Steuereinrichtung 100 weist hierbei entsprechende Sende- und Empfangsteile auf. Die Steuereinrichtungen 100 sind nicht speziell für eine Gruppe von elektrischen und elektronischen Geräten und Einrichtungen (z.B. Beleuchtungseinrichtungen 200, Rollläden 300, etc.) vorgesehen, sondern sind mit den elektrischen und elektronischen Geräten und Einrichtungen verbunden, die durch die entsprechende Steuereinrichtung 100 gesteuert werden sollen.

Die Steuereinrichtungen 100 können darüber hinaus mit anderen Geräten und Einrichtungen zusätzlich verbunden sein, wobei bei dem in Fig. 2 dargestellten Ausführungsbeispiel aus Gründen der Übersichtlichkeit darauf verzichtet worden ist. Als Beispiel sind hierbei elektrisch steuerbare Heizungen zu nennen. Darüber hinaus können im Arbeitszimmer weitere elektrische und elektronische Geräte (Drucker, PC, Radio, weitere Beleuchtungseinrichtungen) vorgesehen sein. Auch können die unterhaltungselektronischen Geräte 400 beispielsweise Set-Top-Boxen und Soundsysteme umfassen, die mit dem Fernsehgerät 402 verbunden sind.

In dem in Fig. 2 gezeigten Ausführungsbeispiel ist die Steuereinrichtung 100 im Eingangsbereich mit den Lampen 202, 204, 216, 218, 220 und 222, der Wetterstation 702, den Rollläden 302 und 304 und dem Garagentor 602 verbunden. Zusätzlich kann die Steuereinrichtung 100 im Eingangsbereich mit der Lampe 206 verbunden sein, so dass durch die Steuereinrichtung 100 im Eingangsbereich die Lampe 206 eingeschaltet wird, wenn ein Benutzer den Eingangsbereich verlässt und in Richtung des Wohn- und Essbereichs geht.

Darüber hinaus kann die Lampe 206 auch durch die Steuereinrichtung 100 im Wohn- und Essbereich gesteuert werden. Es ist in dem Heimautomatisierungsnetzwerk also vorgesehen, dass zusätzlich zur Übertagung von Informationen von einer Steuereinrichtung 100 an eine weitere Steuereinrichtung 100 zur Steuerung von elektrischen und elektronischen Geräten und Einrichtungen mindestens ein Gerät oder eine Einrichtung von zwei Steuereinrichtungen 100 gesteuert werden kann, wobei die Informationen zu diesem Gerät oder dieser Einrichtung von den zwei Steuereinrichtungen 100 erfasst werden.

Die Steuereinrichtung 100 im Arbeitszimmer ist mit der Lampe 214 und dem Rollladen 318 verbunden. Zusätzlich kann die Steuereinrichtung 100 im Arbeitszimmer auch mit der Lampe 206 verbunden sein.

Die Steuereinrichtung 100 im Wohn- und Essbereich ist mit den Lampen 206, 208, 210 und 224, den Rollläden 308, 310, 312, 314 und 316 und dem Fernsehgerät 402 verbunden. Zusätzlich kann die Steuereinrichtung 100 im Wohn- und Essbereich mit dem Rollladen 306 in der Küche, der Lampe 212 in der Küche und der Lampe 202 im Eingangsbereich verbunden sein.

Die Steuereinrichtung 100 in der Küche ist mit der Lampe 212, dem Rollladen 306, dem Herd 502, dem Dunstabzug 504 und der Kaffeemaschine 506 verbunden. Zusätzlich kann die Steuereinrichtung 100 in der Küche mit der Lampe 210 und den Rollläden 308 und 310 verbunden sein.

Betritt ein Benutzer den Eingangsbereich, so wird er von der Steuereinrichtung 100 im Eingangsbereich durch die Bild- und Ton-Erfassungseinrichtung 102 erfasst. Der Benutzer betätigt dann einen nicht dargestellten Lichtschalter, so dass die Lampe 202 eingeschaltet wird. Anschließend geht der Benutzer in den Wohn- und Essbereich und betätigt einen Lichtschalter für die Lampe 206, ebenso betätigt er einen Lichtschalter für die Lampe 208 und schaltet das Fernsehgerät 402 ein. Anschließend geht der Benutzer in die Küche und schaltet über einen Lichtschalter die Lampe 212 an. Anschließend schaltet er die Kaffeemaschine 506 an. Der Bewegungsablauf dieser Person und die Betätigung der Lichtschalter sowie das Einschalten des Fernsehgerätes 402 und der Kaffeemaschine 506 werden unter Speicherung des aktuellen Datums und der Uhrzeit von den jeweiligen Steuereinrichtungen 100 gespeichert. Die jeweils zugeordnete Steuereinrichtung 100 bildet aus den erfassten Daten eine Szene und legt diese in ihrem Speicher 104 und auf dem Server 704 ab.

Kommt der Benutzer am darauffolgenden Tag etwa zur gleichen Uhrzeit wieder nach Hause, so wird er von der Bild- und Ton-Erfassungseinrichtung 102 der Steuereinrichtung 100 im Eingangsbereich erfasst und die Steuereinrichtung 100 stellt die dafür passende Szene (Einschalten der Lampe 202) ein, die im Speicher 104 und auf dem Server 704 hinterlegt ist. Nun bewegt sich der Benutzer in Richtung des Wohn- und Essbereichs. Der Benutzer wird nun an die Steuereinrichtung 100 im Wohn- und Essbereich übergeben. Diese Steuereinrichtung 100 vergleicht die Daten und stellt fest, dass der Benutzer am Vortag die Lampen 206, 208 und 212 eingeschaltet hat und aktiviert automatisch diese Szene. Auch wird das Licht im Eingangsbereich mit der Lampe 202 durch die Steuereinrichtung 100 im Eingangsbereich wieder ausgeschaltet, da der Benutzer den Eingangsbereich verlassen hat.

Auch erfolgt nach dem Einschalten der Lampe 208 und vor dem Einschalten der Lampe 212 in der Küche ein Einschalten des Fernsehgerätes 402. Vorzugsweise schaltet die Steuereinrichtung 100 im Wohn- und Essbereich das Fernsehgerät derart, dass der gleiche Kanal wiedergegeben wird, der am Vortag von dem Benutzer ausgewählt worden ist. Ferner wird die von dem Benutzer eingestellte Lautstärke wieder eingestellt. Nach dem Einschalten der Lampe 212 in der Küche durch die Steuereinrichtung 100 in der Küche wird ebenfalls die Kaffeemaschine 506 eingeschaltet.

Neben einer einzelnen Steuereinrichtung 100 im Eingangsbereich der Wohnebene können in jedem Raum, wie in Fig. 2 dargestellt, oder sogar in einem Raum mehrere Steuereinrichtungen 100 vorgesehen sein, die miteinander kommunizieren und die ihnen bekannten Daten austauschen. Ferner können die Steuereinrichtungen 100 auf einen gemeinsamen Speicher zugreifen, wobei der Speicher auf einem Server 704 vorgesehen ist. Alternativ dazu kann jede Steuereinrichtung 100 einen einzelnen Speicher aufweisen und nur die für seinen Bereich relevanten Szenen speichern oder alle Szenen sind in jeder Steuereinrichtung 100 hinterlegt. Ferner kann das Beenden einer Szene einer Steuereinrichtung 100 den Aufruf einer anderen Szene einer anderen Steuereinrichtung 100 und den Betrieb der elektrischen und elektronischen Geräte und Einrichtungen nach Maßgabe der darin gespeicherten Szene bewirken. Hierbei wird eine sogenannte "Follow Me" Funktion bereitgestellt.

Bei dem vorstehend genannten Beispiel könnte zusätzlich von der Steuereinrichtung 100 im Eingangsbereich gespeichert worden sein, dass der Benutzer vor dem Betreten des Eingangsbereichs das Garagentor 602 betätigt hat und eine als Bewegungsmelder ausgebildete Lampe 220 aktiviert wurde.

Ob der Benutzer in etwa zur gleichen Zeit nach Hause kommt, kann von einer Steuereinrichtung 100 auf verschiedene Arten festgestellt werden. Je mehr Werte einer Steuereinrichtung 100 zur Verfügung stehen, d.h. wenn die Steuereinrichtung 100 über einen längeren Zeitraum die Uhrzeiten aufgenommen hat, zu welchen der Benutzer nach Hause kommt, so genauer kann das Nachhause Kommen in etwa zur gleichen Zeit ermittelt werden. Das bedeutet jedoch nicht, dass das Zeitfenster für eine richtige Erkennung kleiner wird, sondern dass die Steuereinrichtung 100 bspw. über einen Zeitraum von einem halben Jahr festgestellt hat, dass das Nachhause Kommen in einem Zeitfenster von zwei Stunden erfolgt. Ferner kann die Steuereinrichtung 100 über eine Internetverbindung oder über anderweitig empfangbare Verkehrsdaten in Erfahrung bringen, dass ein Stau auf der Route vorliegt und der Benutzer wahrscheinlich eine Stunde später nach Hause kommt. Die Steuereinrichtung 100 kann dazu auch eine Stunde zu dem Zeitfenster dazurechnen. Derartige Verkehrsdaten zum Einschalten von elektrischen und elektronischen Geräten und Einrichtungen sind auch für ein angepasstes Wecken sowie eine Heizung und andere zeitlich vor dem Eintreffen des Benutzers bzw. Bewohners startende Geräte und Einrichtungen nützlich und können zur Steuerung dieser verwendet werden.

In einem weiteren Ausführungsbeispiel umfasst eine Szene, dass ein Benutzer immer wochentags zu einer bestimmten Uhrzeit nach dem Verlassen des Eingangsbereichs das Garagentor 602 öffnet. Daher wird von einer Steuereinrichtung 100 nach dem Verlassen des Eingangsbereichs das Garagentor 602 geöffnet. Die Steuereinrichtung 100 speichert für diese Szene zusätzlich die von der Wetterstation 702 empfangenen Temperaturen. Jedoch verändert der Nutzer bei höheren Temperaturen die gespeicherte Szene durch Drücken einer Fernbedienung für das Garagentor 602 derart, dass das Garagentor 602 wieder geschlossen wird. Die Steuereinrichtung 100 lernt damit, dass das Öffnen des Garagentors 602 in Abhängigkeit der Umgebungstemperatur erfolgt.

Alternativ könnte die Szene auch derart von der Steuereinrichtung 100 abgewandelt werden oder für bestimmte Wochentage eine entsprechende Szene erstellt werden, wenn der Benutzer nur beim Verlassen des Hauses unter der Woche das Garagentor 602 betätigt und am Wochenende nicht. Da die Steuereinrichtung 100 beispielsweise über eine Internetverbindung Zugriff auf weitere Daten hat, wird die Steuereinrichtung 100 an einem Feiertag das Garagentor 602 nicht öffnen, selbst dann, wenn dies ein Wochentag ist und die Uhrzeit der für diese typische Situation gespeicherten Szene entspricht.

Auch das Öffnen der Rollläden 302 bis 318 kann in Abhängigkeit von Benutzereingaben gespeichert und gesteuert werden, unabhängig von den erfassten Wetterdaten, beispielsweise über die Wetterstation 702. So kann beispielsweise das Einschalten des Fernsehgeräts 402 am Samstagnachmittag bei schönem Wetter (Sonnenschein) ein automatisches Schließen der Rollläden 312, 314 und 316 bewirken.

**Bezugszeichenliste**

| | | | |
|---|---|---|---|
| 100 | Steuereinrichtung | 304 | Rollladen |
| 102 | Bild- und Ton-Erfassungseinrichtung | 306 | Rollladen |
| | | 308 | Rollladen |
| 104 | Speicher | 310 | Rollladen |
| 200 | Beleuchtungseinrichtungen | 312 | Rollladen |
| | | 314 | Rollladen |
| 202 | Lampe | 316 | Rollladen |
| 204 | Lampe | 318 | Rollladen |
| 206 | Lampe | 400 | unterhaltungselektronische Geräte |
| 208 | Lampe | | |
| 210 | Lampe | 402 | Fernsehgerät |
| 212 | Lampe | 500 | Haushaltsgeräte |
| 214 | Lampe | 502 | Herd |
| 216 | Lampe | 504 | Dunstabzug |
| 218 | Lampe | 506 | Kaffeemaschine |
| 220 | Lampe | 600 | elektrische Geräte |
| 222 | Lampe | 602 | Garagentor |
| 224 | Lampe | 702 | Wetterstation |
| 300 | Rollläden | 704 | Server |
| 302 | Rollladen | | |

## Patentansprüche

1. Verfahren zum Steuern eines Heimautomatisierungsnetzwerks, aufweisend eine Vielzahl von elektrischen und elektronischen Geräten und Einrichtungen, wobei mindestens eine Steuereinrichtung (100) vorgesehen ist, die dazu ausgebildet ist, die elektrischen und elektronischen Geräte und Einrichtungen zu steuern, wobei die mindestens eine Steuereinrichtung (100) mindestens eine Bild- und Ton-Erfassungseinrichtung (102) aufweist und die mindestens eine Steuereinrichtung (100) mit den elektrischen und elektronischen Geräten und Einrichtungen verbunden ist, aufweisend folgende Schritte:
- Erfassen mindestens eines Lebewesens durch die mindestens eine Bild- und Ton-Erfassungseinrichtung (102), wobei die Steuereinrichtung (100) dem erfassten Lebewesen entsprechende Daten erzeugt und Speichern der Daten in der Steuereinrichtung (100),
- Erfassen der Position des mindestens einen Lebewesens durch die mindestens eine Bild- und Ton-Erfassungseinrichtung (102), wobei die Steuereinrichtung (100) der Position entsprechende Daten erzeugt und Speichern der Daten in der Steuereinrichtung (100),
- Erfassen von Schaltzuständen der elektrischen und elektronischen Geräte und Einrichtungen und deren Betriebsparameter, die von dem mindestens einen Lebewesen vorgenommenen werden, wobei die Steuereinrichtung (100) den Schaltzuständen und Betriebsparameter entsprechende Daten erzeugt und Speichern der Daten in der Steuereinrichtung (100),
- Erstellen einer Szene in Abhängigkeit der gespeicherten Daten unter Verwendung des Datums und der Uhrzeit und Speichern der Szene in der Steuereinrichtung (100),
- Vergleichen der durch die Bild- und Ton-Erfassungseinrichtung (102) erfassten Daten, das Datum und der Uhrzeit mit den Daten einer bereits gespeicherten Szene durch die Steuereinrichtung (100),
- Aufrufen der gespeicherten Szene und Betreiben der elektrischen und elektronischen Geräte und Einrichtungen nach Maßgabe der gespeicherten Szene durch die Steuereinrichtung (100), wenn die erfassten Daten mit den gespeicherten Daten einer Szene im Wesentlichen übereinstimmen, und
- Speichern einer neuen Szene in der Steuereinrichtung (100), wenn die erfassten Daten mit den gespeicherten Daten im Wesentlichen nicht übereinstimmen.

2. Verfahren nach Anspruch 1, wobei die Steuereinrichtung (100) eine Schnittstelle aufweist, über welche die in der Steuereinrichtung gespeicherten Szenen zusätzlich manuell verändert werden.

3. Verfahren nach Anspruch 1 oder 2, wobei eine Szene in Abhängigkeit von: der Dauer des Aufenthalts eines Lebewesens in einem Raum eines Hauses, einem vorgebbaren Zeitraum, einer Position eines Lebewesens, dem Betrieb mindestens eines elektrischen oder eines elektronischen Geräts oder einer Einrichtung und/oder einer Handlung eines Lebewesens verändert und/oder gespeichert wird.

4. Verfahren nach einem der Ansprüche 1 bis 3, wobei für einzelne Lebewesen gespeicherte Szenen durch die Steuereinrichtung (100) kombiniert werden und die elektrischen und elektronischen Geräte und Einrichtungen nach Maßgabe der kombinierten Szene betrieben werden.

5. Verfahren nach einem der Ansprüche 1 bis 4, wobei gespeicherte Szenen angepasst werden, wenn sich Schaltzustände und/oder Betriebsparameter der elektrischen und elektronischen Geräte der gespeicherten Szenen ändern.

6. Verfahren nach einem der Ansprüche 1 bis 5, wobei die Steuereinrichtung (100) weitere Parameter aufnimmt und daraus Daten erzeugt und die Daten in der Steuereinrichtung (100) zur Erzeugung von Szenen gespeichert werden.

7. Verfahren nach Anspruch 6, wobei die weiteren Parameter umweltspezifische, ereignisspezifische, handlungsspezifische und/oder personenspezifische Daten sind.

8. Verfahren nach Anspruch 6 oder 7, wobei die Steuereinrichtung (100) gespeicherte Szenen in Abhängigkeit der weiteren Parameter ändert.

9. Verfahren nach Anspruch 8, wobei die Änderung einer Szene eine Änderung des Schaltzustands und/oder mindestens eines Betriebsparameters mindestens eines der elektrischen und/oder elektronischen Geräte und Einrichtungen bewirkt.

10. Verfahren nach Anspruch 8 oder 9, wobei die Änderung der Szene gespeichert wird oder die Änderung für einen bestimmbaren Zeitraum oder ein einmaliges Ereignis eine Adaption der Szene bewirkt.

11. Steuereinrichtung zur Durchführung eines Verfahrens nach einem der Ansprüche 1 bis 10, wobei die Steuereinrichtung (100) mindestens eine Bild- und Ton-Erfassungseinrichtung (102) aufweist und die mindestens eine Steuereinrichtung (100) mit elektrischen und elektronischen Geräten und Einrichtungen eines Heimautomatisierungsnetzwerks zur Steuerung der elektrischen und elektronischen Geräte und Einrichtungen verbunden ist.

12. Steuereinrichtung nach Anspruch 11, wobei die mindestens eine Steuereinrichtung (100) ein separates Steuergerät ist und das Steuergerät in einem Raum installiert oder ein mobiles Steuergerät ist.

13. Steuereinrichtung nach Anspruch 11 oder 12, wobei die mindestens eine Bild- und Ton-Erfassungseinrichtung (102) zur Erfassung von Lebewesen eine Kamera und ein Mikrophon aufweist.

14. Steuereinrichtung nach einem der Ansprüche 11 bis 13, wobei die mindestens eine Steuereinrichtung (100) dazu ausgebildet ist, Gesten und Bewegungen eines Lebewesens zu erfassen und daraus handlungsspezifische Daten zu generieren.

15. Steuereinrichtung nach einem der Ansprüche 11 bis 14, wobei die mindestens eine Steuereinrichtung (100) mit den elektrischen und elektronischen Geräten und Einrichtungen über eine drahtlose Funkverbindung und/oder über elektrische Verbindungen des Heimautomatisierungsnetzwerks verbunden ist.

16. Steuereinrichtung nach einem der Ansprüche 11 bis 15, wobei die mindestens eine Steuereinrichtung (100) zusätzliche sensorische Einheiten zur Erfassung von Parametern aufweist.

17. Steuereinrichtung nach einem der Ansprüche 11 bis 16, wobei die Steuereinrichtung (100) über ein Kommunikationsnetzwerk mit weiteren Steuereinrichtungen (100) verbunden ist und die Steuereinrichtungen (100) über das Kommunikationsnetzwerk miteinander kommunizieren.

18. Heimautomatisierungsnetzwerk, aufweisend mindestens eine Steuereinrichtung nach einem der Ansprüche 11 bis 17 und eine Vielzahl von elektrischen und elektronischen Geräten und Einrichtungen, wobei die mindestens eine Steuereinrichtung (100) dazu ausgebildet ist, die elektrischen und elektronischen Geräte und Einrichtungen zu steuern, mindestens eine Bild- und Ton-Erfassungseinrichtung (102) aufweist und mit den elektrischen und elektronischen Geräten und Einrichtungen verbunden ist.

19. Heimautomatisierungsnetzwerk nach Anspruch 18, umfassend eine Vielzahl von Steuereinrichtungen (100), wobei in jedem Raum, der mit dem Heimautomatisierungsnetzwerk in Verbindung steht, eine Steuereinrichtung (100) vorgesehen ist.
